# EUROPÄISCHE PATENTSCHRIFT

(11) **EP 1 656 276 B1**
(45) Veröffentlichungstag und Bekanntmachung des Hinweises auf die Patenterteilung: **12.12.2007**
(21) Anmeldenummer: 04764217.8
(22) Anmeldetag: 17.08.2004
(51) Int. Cl.: B60K 7/00

(54) **ELEKTRISCHE ANTRIEBSEINHEIT FÜR EIN KRAFTFAHRZEUG**
ELECTRIC DRIVING UNIT FOR A VEHICLE
UNITE D'ENTRAINEMENT ELECTRIQUE POUR VEHICULE

(30) Priorität: 22.08.2003 DE 10338659
(43) Veröffentlichungstag der Anmeldung: 17.05.2006
(73) Patentinhaber: MAGNET-MOTOR GESELLSCHAFT FÜR MAGNETMOTORISCHE TECHNIK MBH, 82319 Starnberg (DE)
(72) Erfinder: WALTER, Fritz, 82399 Raisting (DE); HEILAND, Andreas, 81377 München (DE); DEIBEL, Fritz, 82396 Pähl (DE); EHRHART, Peter, 81375 München (DE)
(74) Vertreter: Klunker . Schmitt-Nilson . Hirsch
(86) Internationale Anmeldenummer: PCT/EP2004/009229
(87) Internationale Veröffentlichungsnummer: WO 2005/021311

(56) Entgegenhaltungen:
- DE-C- 19 748 201
- US-A- 3 812 928

## Beschreibung

Gegenstand der Erfindung ist eine elektrische Antriebseinheit für ein Kraftfahrzeug, die aufweist:
(a) einen Achsstummel;
(b) einen Elektromotor mit einem bezüglich des Achsstummels festgelegten Stator und einem bezüglich des Achsstummels rotierbar gelagerten Rotor;
(c) ein Getriebe, dessen Eingang für Drehmomentübertragung mit dem Rotor in Verbindung steht;
(d) einen Radträger, der für Drehmomentübertragung mit dem Ausgang des Getriebes in Verbindung steht;
(e) ein erstes Lager des Radträgers das an einer ersten Axialseite des Elektromotors, die dem Getriebe abgewandt ist, vorgesehen ist;
(f) dadurch gekennzeichnet, dass ein zweites Lager des Radträgers
   - entweder ebenfalls an der ersten Axialseite des Elektromotors vorgesehen ist,
   - oder in dem Getriebe vorgesehen ist, verwirklicht durch ein Lager eines rotierbaren, (direkt oder indirekt) an den Radträger angeschlossenen Getriebeteils.

Elektrische Antriebseinheiten für Kraftfahrzeuge sind bekannt. Als Beispiele für elektrisch angetriebene Kraftfahrzeuge seien genannt: Rollerartige Kraftfahrzeuge, auf denen man steht; motorrollerartige Kraftfahrzeuge, auf denen man sitzt; Kleinfahrzeuge, insbesondere für Flughäfen und Golfplätze; Kraftfahrzeuge nach Art der millionenfach produzierten Personen-Kraftfahrzeuge, d. h. typischerweise mit ein bis sieben Sitzplätzen und überdacht; Kleinbusse und Omnibusse; Lastkraftwagen. Insbesondere für alle diese Arten von Kraftfahrzeugen ist die erfindungsgemäße, elektrische Antriebseinheit geeignet. Aus Gründen, die weiter unten noch deutlicher werden, ist die erfindungsgemäße, elektrische Antriebseinheit ganz besonders geeignet für Einsatzfälle, bei denen hohe Antriebs-Drehmomente bzw. hohe Antriebs-Leistungen für das Kraftfahrzeug vorhanden sein sollen, und für große/schwere Kraftfahrzeuge. Beispiele hierfür sind Lastkraftwagen und, allgemeiner, schwere Transportfahrzeuge. Als ganz besonders geeignet seien Kraftfahrzeuge erwähnt, bei denen mehr als ein oder zwei Kraftfahrzeugräder durch eine jeweilige elektrische Antriebseinheit angetrieben werden, z. B. große/schwere Transportfahrzeuge mit vier oder noch mehr angetriebenen Rädern. Obwohl die erfindungsgemäße, elektrische Antriebseinheit in erster Linie für den Einbau in nicht-schienengebundene Kraftfahrzeuge entwickelt worden ist, ist sie auch für Schienenfahrzeuge gut brauchbar.

Bei elektrisch angetriebenen Kraftfahrzeugen stellt sich die Frage, wie das Kraftfahrzeug mit der erforderlichen elektrischen Energie versorgt werden kann. Man kennt insbesondere die folgenden Möglichkeiten: Speicher, aus dem elektrische Energie für die Antriebseinheit entnommen werden kann (z. B. Personenroller mit Akkumulator); Erzeugung elektrischer Energie an Bord des Kraftfahrzeugs (z. B. Verbrennungsmotor mit Stromgenerator an Bord des Fahrzeugs; Brennstoffzellenstapel an Bord des Fahrzeugs); Übertragung elektrischer Energie von außen her in das Kraftfahrzeug (z. B. Omnibus mit Stromabnehmer von einer Oberleitung; Schienenfahrzeug mit Stromabnehmer von einer Oberleitung). Insbesondere für all diese Arten von Anbindung an elektrische Energie ist die erfindungsgemäße, elektrische Antriebseinheit geeignet.

Es wird betont, dass im Rahmen der Erfindung zwar bevorzugt ist, die Antriebseinheit mit einem auf dem Untergrund bzw. einer Abrollbahn abrollenden Kraftfahrzeugrad zu kombinieren. Dies muss aber nicht notwendigerweise der Fall sein. Vielmehr kann der Radträger sein letztlich für den Antrieb des Kraftfahrzeugs gewünschtes Drehmoment an jegliches Bauteil abgeben, welches mit dem Antrieb des Kraftfahrzeugs zu tun hat. All dies wird weiter unten an konkreteren Beispielen noch deutlicher werden. Der Begriff "Radträger" ist jedenfalls keinesfalls einschränkend als "Träger für ein auf dem Untergrund bzw. einer Abrollbahn abrollendes Rad" zu verstehen.

Man kennt elektrische Antriebseinheiten für Kraftfahrzeuge, bei denen ein Elektromotor und ein Getriebe zusammengefasst sind. Dabei gibt es im Stand der Technik Ausbildungsformen, bei denen das Getriebe ein Planetengetriebe ist.

Eine elektrische Antriebseinheit mit den Merkmalen des Oberbegriffs des Anspruchs 1 ist bekannt aus DE-C-19748201.

Der Erfindung liegt die Aufgabe zugrunde, eine elektrische Antriebseinheit für ein Kraftfahrzeug verfügbar zu machen, bei der der Elektromotor und das Getriebe derart günstig kombiniert sind, dass sich Vorteile beim Platzbedarf und/oder beim Zusammenbau/Demontage ergeben.

Bei der erfindungsgemäßen, elektrischen Antriebseinheit ist, gemäß erster Alternative, die Lagerung des Radträgers auf der dem Getriebe abgewandten Axialseite des Elektromotors konzentriert. Infolgedessen sind beste Vorraussetzungen dafür geschaffen, den Elektromotor und das Getriebe nacheinander in Axialrichtung auf den Achsstummel zu montieren bzw. eine äußerst einfache Demontage in umgekehrter Richtung und Reihenfolge vornehmen zu können, insbesondere bei Reparatur- und Wartungsarbeiten. Bei der zweiten erfindungsgemäßen Alternative ergibt sich eine Einsparung an Lagerungsaufwand und an benötigtem Raum. Bei geschickter Ausführung ergeben sich ähnlich gute Montage- und Demontageverhältnisse, wie zuvor im Zusammenhang mit der ersten Alternative geschildert. Vorzugsweise läßt sich die Antriebseinheit so ausbilden, dass das Getriebe und der Elektromotor auch ohne Demontage des Fahrzeugrads, d. h. ohne Hochbocken des Fahrzeugs, demontiert werden können.

Vorzugsweise ist bei der erfindungsgemäßen, elektrischen Antriebseinheit das Getriebe ein Planetengetriebe mit einem Sonnenrad, Planetenrädern, einem Planetenträger und einem Hohlrad. Vorzugsweise hat das Planetengetriebe Stufenplanetenräder. Auch ein mehrstufiges Planetengetriebe ist möglich. Planetengetriebe haben den Vorteil, bei vergleichsweise geringem Raumbedarf hohe Drehmomente übertragen zu können und große Übersetzungsverhältnisse liefern zu können. Vorzugsweise handelt es sich bei der Erfindung um Übersetzungen von höherer Drehzahl in niedrigere Drehzahl, entsprechend Übersetzungen von niedrigerem Drehmoment in höheres Drehmoment.

Bei der erfindungsgemäßen Antriebseinheit sind der Elektromotor und das Getriebe vorzugsweise koaxial nebeneinander angeordnet.

Vorzugsweise ist das genannte Lager eines rotierbaren Getriebeteils ein Lager des Planetenträgers. Wenn man ein Planetengetriebe mit Abtrieb von dem Planetenträger vor sich hat, ist der Planetenträger sowieso mit dem Radträger verbunden. Außerdem ist der Planetenträger sowieso für seine Drehbewegung gelagert, so dass man im Grunde ein Lager einspart. Dabei ist es bevorzugt, die radialen Radlasten vom Radträger über den Planetenträger und das genannte Lager des Getriebeteils in den Achsstummel einzuleiten und dieses Lager entsprechend der Gesamtkräfte auszulegen.

Im Fall der zweiten Alternative der Erfindung ist es bevorzugt, ein gemeinsames Schmiermittel für das Getriebe und das genannte Lager eines rotierbaren Getriebeteils vorzusehen. Dieses Schmiermittel ist vorzugsweise Getriebeöl.

Aufgrund der erfindungsgemäßen engen Kombination von Elektromotor und Getriebe ist es gut möglich und bevorzugt, dass der Rotor des Elektromotors und der Eingang des Getriebes ohne ein zwischengefügtes Ausgleichselement in Verbindung stehen. Die Lagerung des Rotors und die Lagerung am Eingang des Getriebes sind lagerungsmäßig auf dem Achsstummel gekoppelt, so dass hier auf ein zwischengefügtes Ausgleichselement zum Ausgleichen von Toleranzen verzichtet werden kann.

Vorzugsweise ist der Radträger axial geteilt ausgebildet. Hierdurch ist es möglich, einen ersten Axialteil des Radträgers an dem Getriebe bei dessen Demontage von der Antriebseinheit zu belassen. Dann hat man bessere Zugänglichkeit zu den anderen Bestandteilen der Antriebseinheit.

Vorzugsweise ist das Getriebe als Modul von der Antriebseinheit demontierbar (und beim Zusammenbau als Modul montierbar). Diese Modul-Demontierbarkeit soll den Fall einschließen, dass ein geringer Restbestandteil des Getriebes bei der Demontage des Hauptteils des Getriebes (zunächst) an der Antriebseinheit verbleibt. Die Modul-Demontierbarkeit erleichtert Wartungs- und Reparaturarbeiten. Das Getriebe kann rasch und einfach insgesamt ausgewechselt werden. Nach Demontage des Getriebes ist der Elektromotor rasch und einfach zugänglich. Vorzugsweise ist das Getriebemodul zusammen mit einem Radträger-Teil demontierbar.

Vorzugsweise ist der Hauptteil des Rotors des Elektromotors, nach Lösen von seinem Lagerungsbereich, in Axialrichtung von der Antriebseinheit demontierbar. Vorzugsweise ist der Stator des Elektromotors in Axialrichtung von der Antriebseinheit demontierbar. Die bevorzugten Demontagemöglichkeiten ergeben "umgekehrt" bevorzugte Montagemöglichkeiten. Die bevorzugte Demontierbarkeit bzw. Montierbarkeit des Elektromotors gleichsam in zwei Bestandteilen, ohne dass die eigentliche Lagerung des Rotors demontiert werden müßte, führt zu einer bequemen und raschen Demontage bzw. Montage des Elektromotors für Wartungs- und Reparaturarbeiten. Alternativ ist bevorzugt, den Elektromotor insgesamt von dem Achsstummel demontieren bzw. an diesem montieren zu können.

Vorzugsweise ist das erste Lager des Radträgers mindestens mit einem Teil seiner axialen Länge innerhalb der axialen Länge des Elektromotors positioniert, d. h. in den Bereich des Elektromotors hinüber verlagert. Hierdurch wird für die gesamte Antriebseinheit gesehen axialer Platz eingespart.

Vorzugsweise ist ein Endbereich des Radträgers in einem Ringraum positioniert, der das Getriebe umgibt. Auf diese Weise ist der Endbereich des Radträgers von außen her gut zugänglich. Es ist bevorzugt, wenn sich ein Stirnende des Radträgers innerhalb der axialen Dimension des Getriebes befindet. Besonders günstig ist es, wenn dieses Stirnende des Radträgers gegenüber dem Ende der axialen Dimension des Getriebes zurückgesetzt ist, am Besten so weit, dass dort ein von dem Radträger anzutreibendes Bauteil (insbesondere Reifenfelge oder Kettenrad) befestigt werden kann, ohne dass Befestigungsteile über die axiale Begrenzung des Getriebes vorstehen.

Vorzugsweise ist an dem Radträger eine Reifenfelge, besonders bevorzugt eine Standardfelge, befestigt. Auf der Reifenfelge kann ein Reifen montiert sein. Jetzt hat man eine stärker komplettierte Antriebseinheit vor sich, die im Wesentlichen aus Radträger, Felge, Reifen, Elektromotor und Getriebe besteht. Es ist bevorzugt, wenn diese komplettierte Radantriebseinheit oder die zuvor beschriebene erfindungsgemäße Antriebseinheit als Gesamteinheit von dem Fahrzeug demontierbar und umgekehrt an das Fahrzeug montierbar ist. Bevorzugt wird eine axial zweigeteilte Fahrzeugfelge verwendet, deren Teilung bevorzugtermaßen näher an der der Fahrzeugmitte zugewandten Seite erfolgt, d. h. dass der axial schmalere Seitenring der Felge an der Innenseite der Felge angeordnet ist.

Es wird betont, dass der Begriff "Radträger" nicht dahingehend einschränkend zu verstehen ist, dass er beim Betrieb unbedingt mit einem Fahrzeugrad, welches auf dem Untergrund oder einer vorbereiteten Bahn abrollt, versehen sein muss. Alternativen sind möglich. Als weitere bevorzugte Möglichkeit wird ein Kettenrad genannt, welches z. B. eine Raupenkette eines Raupenfahrzeugs antreibt, z. B. im Fall eines Erdbewegungsfahrzeugs. Als weitere Alternative sei die Befestigung eines Zahnrads an dem Radträger genannt, welches z. B. bei einer Zahnradbahn mit einer stationären Zahnstange zusammenwirken kann oder über drehende Zwischenteile auf das Antriebsrad eines Kraftfahrzeugs arbeitet.

Es ist möglich, das Getriebe entweder an derjenigen Seite des Elektromotors vorzusehen, die beim Einsatz der Antriebseinheit weiter weg von dem Fahrzeugzentrum ist, oder an der anderen Seite des Elektromotors. Die erstgenannte Alternative ist bevorzugt, weil sie in der Regel zu einer bequemeren Befestigung des Stators des Elektromotors an dem Achsstummel führt.

Vorzugsweise ist an der dem Getriebe abgewandten Seite des Radträgers eine Bremseinrichtung vorgesehen, wobei der drehbare Teil der Bremseinrichtung (typischerweise Bremsscheibe oder Bremstrommel) direkt oder über Zwischenteile indirekt mit dem Radträger verbunden ist. Jetzt hat man eine komplettierte Antriebseinheit vor sich, die außer Radträger, Elektromotor, Getriebe, ggf. Radfelge, ggf. Reifen, auch eine Bremseinrichtung beinhaltet.

Bei vielen Ausführungsformen der Erfindung ist es möglich, den Ausgang des Getriebes und den Radträger starr miteinander zu koppeln. Es gibt allerdings Ausführungsformen, bei denen es vernünftig ist, zwischen dem Ausgang des Getriebes und dem Radträger eine Kopplung vorzusehen, die Relativbewegungen ausgleicht. Das sind insbesondere solche Ausführungsformen, bei denen beide Lager des Radträgers auf einer Seite des Getriebes auf dem Achsstummel vorgesehen sind, weil es hier prinzipbedingt eher zu Relativbewegungen zwischen Getriebe und Radträger kommt bzw. weil es generell eher zu herstellungsbedingten, kleinen Fehlpositionierungen der Relation zwischen dem Ausgang des Getriebes und dem Bereich des Radträgers, wo er mit dem Getriebe gekoppelt ist, kommen kann.

Kopplungen, die Relativbewegungen ausgleichen, können vorzugsweise eine Bogenzahnkupplung oder eine elastische mechanische Kupplung oder ein einseitig fixiertes Drehmomentübertragungsrohr mit toleranzausgleichender Verzahnung sein.

Nach einer bevorzugten Weiterbildung der Erfindung ist in dem Drehmomentübertragungsweg zwischen dem Elektromotor und dem Getriebe eine lösbare Verbindung vorgesehen. Es ist eine wesentliche Erleichterung im praktischen Einsatz eines mit mindestens einer erfindungsgemäßen Antriebseinheit ausgerüsteten Kraftfahrzeugs, wenn insbesondere für das Abschleppen des Fahrzeugs mit Hilfe eines anderen Fahrzeugs oder für Weiterfahrt im Fall eines defekten Elektromotors, zwar noch das Getriebe mitdreht, ohne dass sich aber zwangsläufig auch der Rotor des Elektromotors dreht. Die lösbare Verbindung muss nicht streng genommen vor dem Eingang des Getriebes liegen. Sie kann auch zwischen zwei Getriebebauteilen liegen. Es ist jedoch günstig, wenn sie zumindest nahe dem Getriebeeingang liegt, wo noch keine Drehmomenterhöhung stattgefunden hat. Es ist ausführungsmäßig bevorzugt, die lösbare Verbindung radial innerhalb der Lagerung des rotierbaren, an den Radträger angeschlossenen Getriebeteils vorzusehen.

Insgesamt ist es bevorzugt, die lösbare Verbindung in das Getriebe zu integrieren. Es ist bevorzugt, wenn die lösbare Verbindung von außen her lösbar ist. Die lösbare Verbindung kann so ausgeführt werden, dass sie bei stehendem Kraftfahrzeug gelöst werden kann; besonders gut ist es jedoch, die lösbare Verbindung so auszubilden, dass sie bei in Fahrt befindlichem Kraftfahrzeug lösbar ist.

In bevorzugter Weiterbildung der Erfindung ist ein Steckersystem zur elektrischen und kühlungsmäßigen Anbindung des Elektromotors vorgesehen. Dies ist die bevorzugte Alternative zu einer - im Rahmen der Erfindung ebenfalls möglichen - Anbindung mit Leitungen, die nicht durch Stecker anschließbar und lösbar sind. Zur elektrischen Anbindung gehört die Zufuhr elektrischer Energie für die Antriebsmotorfunktion, ggf. die Abfuhr elektrischer Energie (wenn der Elektromotor auch in Bremsfunktion eingesetzt wird), häufig elektrische Steuerungsverbindungen (ganz besonders, wenn eine elektronische Steuerung des Elektromotors im Inneren des Kraftfahrzeugs positioniert ist), und häufig elektrische Verbindungen zu Sensoren im Bereich der Antriebseinheit. Zu der kühlungsmäßigen Anbindung gehört in der Regel eine Leitung oder ein Leitungspfad für Kühlfluid (flüssig oder gasförmig) zur Kühlung des Elektromotors. Außer den genannten Anbindungen können vorzugsweise noch weitere Verbindungen, die über das Steckersystem hergestellt werden, vorhanden sein. In diesem Zusammenhang seien insbesondere Verbindungsleitungen für eine Reifendruckregelanlage und/oder einen radseitigen Drehzahlgeber, außerdem eine kühlungsmäßige Anbindung für das Getriebeöl genannt. Auch die Möglichkeit einer Leitung zur Entlüftung des Getriebes oder zur Betätigung der lösbaren Verbindung zwischen Getriebe und Elektromotor sei erwähnt.

Was die Leitungen zwischen der Antriebseinheit und dem restlichen Fahrzeug (d. h. normalerweise dem Fahrzeuginneren) anlangt, sind zwei Philosophien ausführbar: Zum Einen die Philosophie der Zusammenfassung, so dass man zu einer gemeinsamen Umhüllung für alle Leitungen zwischen der Antriebseinheit und dem restlichen Fahrzeug kommt, und zum Anderen die Philosophie der mehr oder weniger weitgehenden Aufteilung der Leitungen auf mehrere Leitungsstränge. Bei der erstgenannten Philosophie gestalten sich Montage und Demontage besonders einfach; im Fall von Defekten muss jedoch normalerweise der gesamte, vereinigte Leitungsstrang ausgewechselt werden. Bei der zweitgenannten Philosophie ist zwar der Montageaufwand etwas höher, aber man hat es mit dünneren, flexibleren Leitungssträngen zu tun, die eine größere Freiheit der Leitungsstrangführung mit sich bringen. Wenn man mehrere Leitungsstränge hat, ist es bevorzugt, separierte Leitungsstrangführungen an oder in unterschiedlichen Teilen der Radaufhängung des betreffenden Rads des Fahrzeugs vorzusehen. Hierbei können die eventuell verschieden dimensionierten Teile der Radaufhängung entsprechend für die Leitungsstrangführung verwendet werden. Es ist in Weiterbildung der Erfindung möglich, die Leitungen teilredundant auszuführen, so dass z. B. bei Ausfall eines von mehreren Leitungssträngen immer noch funktionierende Statorwicklungen in genügender Zahl, ausreichende Kühlung etc., und sei es für verminderte Motorleistung, zur Verfügung stehen.

Das Arbeiten mit einem gemeinsamen Leitungsstrang für alle Leitungen bedeutet nicht zwingend, dass das Steckersystem aus einem einzigen, zusammensteckbaren Paar von Steckereinheiten besteht, wiewohl dies eine der technisch ausführbaren Möglichkeiten ist. Man kann jedoch auch mehrere Paare von zusammenzusteckenden Steckereinheiten vorsehen, z. B. ein oder mehrere Paare von elektrischen Steckereinheiten und ein oder mehrere Paare von Fluid-Steckereinheiten. Im Fall mehrerer Leitungsstränge kann pro Leitungsstrang ein Paar von Steckereinheiten vorgesehen sein; dies ist jedoch nicht zwingend, andere Aufteilungen und Zusammenfassungen bei den Paaren von Steckereinheiten sind möglich. Auf folgende bevorzugte Merkmale des Stekkersystems bzw. der Steckereinheiten wird hingewiesen: Ein oder mehrere vorauseilende Führungsstifte, schwimmende Anordnung insbesondere kleinerer Kontaktstifte (z. B. für Sensorverbindungen) auf einem gemeinsamen Träger, selbstdichtende Kupplungen für Flüssigkeit und ggf. Druckluft.

Vorzugsweise läßt sich der Elektromotor der Antriebseinheit als Bremse betreiben, wobei er als Generator arbeitet. Der Elektromotor bzw. die Elektromotoren aller Antriebseinheiten des Kraftfahrzeugs können (zusammen) die Hauptbetriebsbremse des Kraftfahrzeugs darstellen. Die weiter vorn erwähnte, mechanische Bremseinrichtung kann Hauptbetriebsbremse oder unterstützende Betriebsbremse neben den Elektromotoren, oder lediglich Park- und/oder Notbremse sein.

Vorzugsweise ist der Elektromotor mit dauermagnetischer Erregung am Rotor ausgebildet. Derartige Elektromotoren lassen sich mit besonders hoher Leistungsdichte ausführen, was angesichts der Raumverhältnisse bei der erfindungsgemäßen Antriebseinheit sehr vorteilhaft ist. Vorzugsweise ist der Elektromotor mit Außenrotor ausgebildet. Derartige Motoren lassen sich mit besonders hoher Leistungsdichte und mit besonders hohem Drehmoment, gemessen am Volumen oder am Gewicht, bauen. Dies sind gute Vorraussetzungen für die Integration in die erfindungsgemäße Antriebseinheit.

Ein weiterer Gegenstand der Erfindung ist eine Radantriebseinheit für ein Kraftfahrzeug, die aufweist:
(a) eine elektrische Antriebseinheit, wie sie in der Anmeldung offenbart ist;
(b) und ein an dem Radträger der Antriebseinheit befestigtes Kraftfahrzeug-Rad.

Diese Radantriebseinheit ist eine Komponente, die als Einheit von dem Kraftfahrzeug demontierbar und an das Kraftfahrzeug montierbar ist. Außer der mechanischen Anbringung sind dann lediglich noch die elektrischen und kühlungsmäßigen Verbindungen, insbesondere durch ein Steckersystem, herzustellen.

Vorzugsweise ist die Antriebseinheit, gewünschtenfalls mit Ausnahme eines fahrzeugseitigen Teilbereichs des Achsstummel-Bauteils, vorzugsweise einschließlich einer Bremsscheibe oder einer Bremstrommel, im Wesentlichen innerhalb der axialen Dimension des Kraftfahrzeug-Rads untergebracht. Oder in anderen Worten: Die so definierte Antriebseinheit ist in Axialrichtung im Wesentlichen nicht breiter als das Kraftfahrzeug-Rad und ragt im Wesentlichen an keiner der beiden Radseiten axial über das Rad hinaus.

Vorzugsweise weist die Radantriebseinheit mindestens einen Befestigungsbereich auf, an dem sie an einer Radaufhängung des Kraftfahrzeugs befestigbar ist. Dabei kann es sich um Anschlussstellen für lenkerartige Bauteile der Radaufhängung handeln, aber auch um Ausführung des Achsstummel-Bauteils als ein Bauteil nach Art eines Achsschenkels, so dass die gesamte Radantriebseinheit zum Lenken des Kraftfahrzeugs verschwenkt werden kann.

Noch ein weiterer Gegenstand der Erfindung ist ein Kraftfahrzeug, das mindestens eine Antriebseinheit, wie sie in der Anmeldung offenbart ist, oder mindestens eine Radantriebseinheit, wie sie in der Anmeldung offenbart ist, aufweist.

Bei dem mit der erfindungsgemäßen Antriebseinheit bzw. der kompletteren erfindungsgemäßen Radantriebseinheit ausgestatteten Kraftfahrzeug kann es sich um ein Kraftfahrzeug handeln, bei welchem nur die Räder einer Achse lenkbar sind. Es kann sich aber auch um ein Fahrzeug handeln, bei dem die Räder von zwei Achsen oder auch die Räder von noch mehr Achsen lenkbar sind. Es kann sich um ein Fahrzeug handeln, bei welchem die Räder aller Achsen lenkbar sind.

Die Erfindung und bevorzugte Ausgestaltungen der Erfindung werden nachfolgend anhand von zeichnerisch dargestellten Ausführungsbeispielen näher erläutert. Es zeigt:
- Fig. 1: eine erste Ausführungsform einer Radantriebseinheit im axialen Längsschnitt;
- Fig. 2: einen Ausschnitt von Fig. 1 in größerem Maßstab;
- Fig. 3: eine zweite Ausführungsform einer Radantriebseinheit im axialen Längsschnitt;
- Fig. 4: eine zweigeteilte Reifenfelge im axialen Längsschnitt.

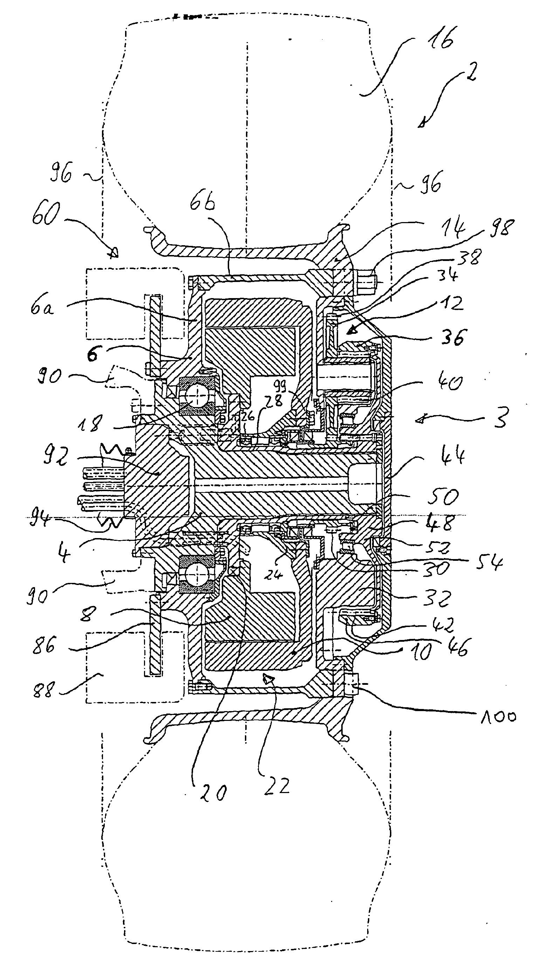

Die in Fig. 1 zeichnerisch dargestellte Radantriebseinheit 2 enthält folgende Hauptkomponenten:
- Achsstummet-Bauteil 4,
- Radträger 6,
- Stator 8 eines Elektromotors 22,
- Rotor 10 des Elektromotors 22,
- Getriebe 12 in Form eines Planetengetriebes,
- Radfelge 14,
- Reifen 16,
- Bremseinrichtung 60.

Wenn man von der so beschriebenen Radantriebseinheit 2 die Radfelge 14 mitsamt dem Reifen 16 wegnimmt, hat man eine erfindungsgemäße Antriebseinheit 3 mit den Hauptbestandteilen Radträger 6, Elektromotor 22, Getriebe 12, Bremsscheibe 86 vor sich.

Das Achsstummel- Bauteil 4, im folgenden kurz als Achsstummel 4 bezeichnet, hat in seinem in Fig. 1 linken Bereich einen größeren Durchmesser und in seinem in Fig. 1 rechten, axial längeren Bereich einen kleineren Durchmesser. Auf dem Bereich größeren Durchmessers ist ein erstes Lager 18, bei diesem Ausführungsbeispiel ein Kugellager, des Radträgers 6 angeordnet.

Der Radträger 6 ist insgesamt - grob gesprochen - becherförmig und besteht hauptsächlich aus einem - grob gesprochen - scheibenförmigen ersten Teil 6a und einem im wesentlichen zylindrischen Teil 6b.

Am Durchmesserübergang von dem durchmessergrößeren Bereich des Achsstummels 4 zu dem durchmesserkleineren Bereich ist auf dem Achsstummel 4 ein Befestigungsring 20 befestigt. An dem Befestigungsring 20 ist der Stator 8 des Elektromotors 22 befestigt. Der Stator 8 ist an seiner in Fig. 1 linken Stirnfläche, mit Ausnahme seines radial äußeren Bereichs, axial ein Stück ausgenommen, so dass das erste Lager 18 des Radträgers 6 ein Stück weit in die axiale Dimension des Elektromotors 22 hinein reicht.

Der Rotor 10 des Elektromotors 22 ist becherförmig, wobei der Becher nach links in Fig. 1 offen ist und wobei im zentralen Bereich ein hülsenförmiger Ansatz 24, der nach links in Fig. 1 ragt, angeschraubt ist. Zwei axial beabstandete Kugellager 26 des Rotors 10 sind zwischen - radial innen - einem büchsenartigen Fortsatz 28 des Befestigungsrings 20 und -radial außen - dem Ansatz 24 positioniert.

Zunächst wird die Ausbildung der drehmomentübertragenden Verbindung zwischen dem Rotor 10 und dem Getriebe 12 noch nicht beschrieben. Das Getriebe 12, hier ausgeführt als einstufiges Planetengetriebe, schließt in Fig. 1 rechts an den Elektromotor 22 an. Das Getriebe 12 weist als seine Hauptbestandteile ein drehend antreibbares Sonnenrad 30, einen für Rotation gelagerten Planetenträger 32, mehrere umfangsmäßig verteilt angeordnete und in dem Planetenträger 32 für eigene Drehung gelagerte Planetenräder 34, und ein innenverzahntes Hohlrad 36 auf, welches nicht-drehend auf dem Achsstummel 4 festgelegt ist. Das Sonnenrad 30 kämmt mit einer ersten Verzahnung 38 des jeweiligen Planetenrads 34. Jedes Planetenrad 34 besitzt axial neben der ersten Verzahnung 38 auf einem kleineren Durchmesser eine zweite Verzahnung 40, die mit der Innenverzahnung 42 des Hohlrads 36 kämmt, ist also ein Stufenplanetenrad. Der Getriebeausgang des Getriebes 12 ist der Planetenträger 32, der im Bereich seines Außenumfangs an der in Fig. 1 nach rechts weisenden Stirnfläche des zylindrischen Teils 6b des Radträgers 6 angeschraubt ist. In Fig. 1 nach rechts hin ist das Getriebe 12 und damit die gesamte Antriebseinheit 3 durch einen zweiteiligen Deckel 44 abgeschlossen.

Das Hohlrad 36 besteht im wesentlichen aus einem ringartigen, innenverzahnten Verzahnungsteil 46 und - damit verschraubt - einem Hauptkörper 48, der einen im wesentlichen zylindrischen Zentralbereich 50 und einen vom Zentralbereich radial nach außen führenden Mittelbereich 52 aufweist. Der Zentralbereich 50 ist auf dem Achsstummel 4 positioniert und dort fest gegen Drehung festgelegt. Der Planetenträger 32 ist mit einem Lager 54, bei diesem Ausführungsbeispiel einem Rollenlager, auf dem Zwischenbereich 52 des Hohlrads 36 drehend gelagert. Da der Planetenträger 32 an seinem Außenumfang mit dem Radträger 6 verschraubt ist, stellt das Lager 54 ein zweites Lager des Radträgers 6 dar. Dieses Lager 54 hat somit Doppelfunktion, es lagert den Planetenträger 32 des Getriebes 12 und lagert, indirekt, auch den Radträger 6, und zwar in äußerst platzsparender Form innerhalb des Getriebes 12. Das erste Lager 18 und das zweite Lager 54 des Radträgers 6 haben einen erwünscht großen, axialen Abstand voneinander.

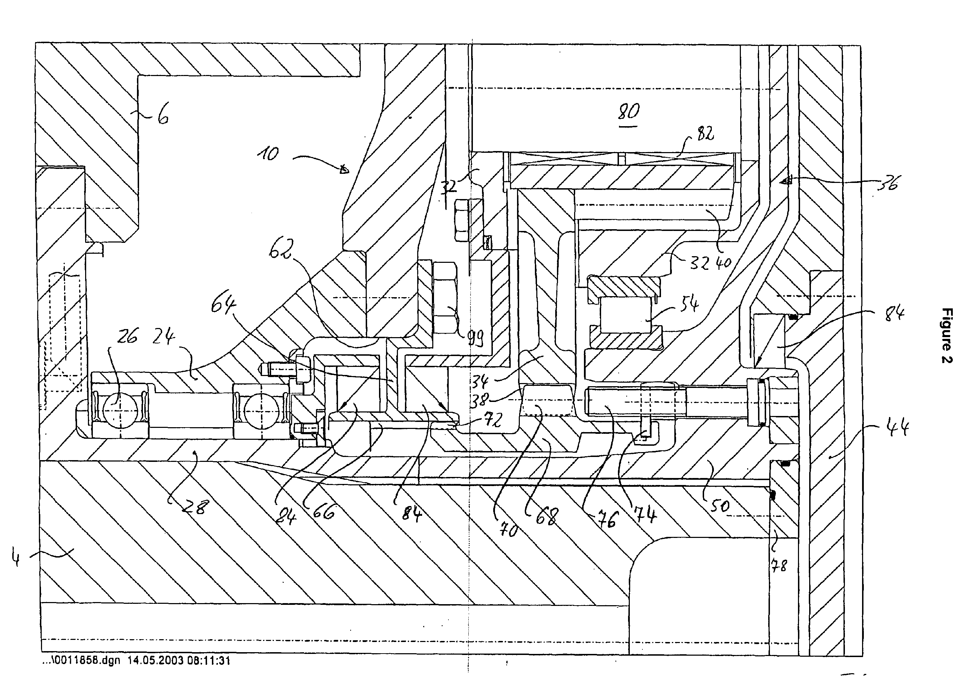

Anhand von Fig. 2 wird jetzt die drehmomentübertragende Verbindung zwischen dem Rotor 10 des Elektromotors 22 und dem Getriebeeingang des Getriebes 12 beschrieben. Der Rotor 10 hat eine Zentralbohrung 62, die einen ein Stück größeren Durchmesser hat als der rechte Bereich des Achsstummels 4. In diesem Bereich ist ein nach radial nach innen ragender Ring 64 an den Rotor 10 angeschraubt. In seiner Innenbohrung ist der Ring 64 mit einer axial verlaufenden Vielnutverzahnung 66 versehen. Ferner sieht man einen buchsenartigen Verzahnungsring 68, der in einem leicht rechts von der Mitte befindlichen Bereich eine Außenverzahnung 70 besitzt. Diese Außenverzahnung 70 kämmt mit den Verzahnungen 38 der mehreren Planetenräder 34, so dass der Verzahnungsring 68 das Sonnenrad des Planetengetriebes 12 darstellt. In seinem in Fig. 2 linken Endbereich weist der Verzahnungsring 68 eine äußere, axial verlaufende Vielnutverzahnung 72 auf. Diese äußere Vielnutverzahnung 72 ist in die zuvor beschriebene, innere Vielnutverzahnung 66 des Rings 64 eingepasst. Es versteht sich, dass die Vielnutverzahnungen 66 und 72 so genau und passend zueinander eingearbeitet sind, dass eine gute Zentrierung des Verzahnungsrings 68 in dem Rotor 10 sichergestellt ist.

Jetzt wird beschrieben, auf welche Weise die bisher beschriebene, drehmomentübertragende Verbindung zwischen dem Rotor 10 und dem Getriebe 12 gelöst bzw. aufgehoben werden kann. Der Verzahnungsring 68 weist in seinem in Fig. 2 rechten Endbereich eine äußere Umfangsnut auf, in die ein geteilter Ring 74 (in der Zeichnung nicht zu sehen) von außen her eingreift. Über seinen Umfang verteilt besitzt der Ring 74 mehrere Gewindebohrungen, die jeweils von einer Gewindeschraube 76 durchsetzt sind. Wenn man alle Schrauben 76 gleichzeitig dreht, wird der Ring 74 wie eine Wandermutter in Axialrichtung der Antriebseinheit 3 verschoben, und zwar in Richtung nach links in Fig. 2. Der Ring 74 nimmt hierbei den Verzahnungsring 68 nach links mit, wobei sich der Verzahnungsring 68 wegen des Paars von Vielnutverzahnungen 66 und 72 problemlos nach links verschieben kann. Diese Verschiebebewegung geht so weit, bis die Verzahnung 70 des Verzahnungsrings 68 außer Eingriff mit der betreffenden Verzahnung 38 des betreffenden Planetenrades 34 kommt. In diesem Zustand ist die Drehmomentübertragung von dem Sonnenrad des Planetengetriebes 12 zu den Planetenrädern 34 des Getriebes 12 unterbrochen. Durch entgegengesetztes Drehen der Gewindeschrauben 76 läßt sich der Eingriff zwischen dem Sonnenrad und den Planetenrädern 34 wieder herstellen. Die Möglichkeit, die drehmomentübertragende Verbindung zwischen dem Elektromotor 22 und dem Getriebe 12 zu lösen bzw. zu unterbrechen, ist von Vorteil, wenn das mit einem oder mehreren, erfindungsgemäßen Radantriebseinheiten 1 ausgerüstete Kraftfahrzeug abgeschleppt werden soll oder wenn der Elektromotor 22 einer von mehreren Radantriebseinheiten 2 defekt ist, aber das Fahrzeug mit dem Elektromotor 22 mindestens einer anderen Radantriebseinheit 2 weitergefahren werden soll.

Es wird betont, dass statt der beschriebenen, einfachen, mechanischen Ausführung mit Gewindeschrauben 76 auch stärker mechanisierte Lösungen ausgeführt werden können. Als ein weiteres Beispiel sei das Vorsehen eines hydraulischen oder pneumatischen Ringkolbens genannt, der auf den Verzahnungsring 68 wirkt. Eine derartige Lösung, wie auch andere mögliche Lösungen, können unschwer so ausgeführt werden, dass das Lösen der drehmomentübertragenden Verbindung zwischen dem Elektromotor 22 und dem Getriebe 12 ohne jegliche Demontagearbeit und sogar während der Fahrt des Kraftfahrzeugs möglich ist. Die Hydraulikflüssigkeit oder die Druckluft zur Betätigung des Lösens/Schließens der drehmomentübertragenden Verbindung kann durch Leitungen im Inneren des Achsstummels 4 und am in Fig. 2 rechten Stirnende des Achsstummels 4 nach radial außen umbiegend erfolgen.

In Fig. 2 sieht man auch deutlich den zylindrischen Zentralbereich 50 des Hohlrads 36 und das zweite Lager 54. Das Hohlrad 36 ist mittels eines Andrückrings 78, der an das rechte Stirnende des Achsstummels 4 angeschraubt ist, axial gegen den Fortsatz 28 des Befestigungsrings 20 für den Stator 8 des Elektromotors 22 gespannt. Das Hohlrad 36, der Andrückring 78 und der Fortsatz 28 sind alle drehfest auf dem Achsstummel 4 festgelegt.

In Fig. 2 sieht man auch gut, wie ein Lagerungsbolzen 80 für ein Planetenrad 34 (es sind über den Umfang verteilt mehrere Lagerungsbolzen 80 und Planetenräder 34 vorhanden) in dem Planetenträger 32 angebracht ist, und zwar undrehbar und in Axialrichtung unverschiebbar. Auf dem Lagerungsbolzen 80 ist das betreffende Planetenrad 34 mittels Nadellagern 82 drehbar gelagert. Die Verzahnung 40 des Planetenrads 34 kämmt mit der Innenverzahnung 42 des Hohlrads 36.

Das Getriebe 12 ist in seinem Inneren mit Getriebeöl gefüllt. Simmerringe 84 übernehmen die Abdichtung des Getriebes 12 am linken Ende und am rechten Ende.

Zurückgehend zu Fig. 1 wird jetzt die Bremseinrichtung 60 genauer beschrieben. Die Bremseinrichtung 60 weist bei dem vorliegenden Ausführungsbeispiel eine Bremsscheibe 86 auf, die von links her an eine Anbringungsfläche des Radträgers 6 angeschraubt ist, und mehrere Bremssättel 88 über den Umfang der Bremsscheibe 86 verteilt. Die Bremssättel 88 enthalten Bremskolben und Bremsklötze (nicht gezeichnet). Hydraulisch, pneumatisch und elektrisch betätigte Bremsen sind möglich.

Schließlich erkennt man in Fig. 1 Radaufhängungsteile 90, mit denen die gesamte Radantriebseinheit 2 im betriebsbereiten Zustand an einem Kraftfahrzeug befestigt ist. Die Radaufhängungsteile 90 sind an einer oder mehreren, nach links weisenden Befestigungsflächen des Achsstummel-Bauteils 4 angeschraubt.

Schließlich erkennt man in Fig. 1 eine Steckereinheit 92, die zentral und koaxial in einer in Fig. 1 linken, stirnseitigen Ausnehmung des Achsstummels 4 sitzt. Die Steckereinheit 92 besitzt auf einem Durchmesser umfangsmäßig verteilt mehrere elektrische Steckerstifte (insbesondere für Zuführung elektrischer Energie zu den Wicklungen des Stators 8, für die Übermittlung von Signalen zwischen der Antriebseinheit 3 und dem Fahrzeug, z.B. Drehstellungssensor des Elektromotors 22, Sensoren für Temperaturen im Elektromotor 22 und im Getriebe 12, Sensor für Reifendruck, Drehzahlsensor für Antiblockiersystem der Bremseinrichtung 60) und mehrere steckerstiftartige, hohle Stutzen zur Führung eines Fluids (insbesondere Kühlwasser oder Kühlöl für den Stator 8, Getriebeölkühlung). Die Gegenelemente für alle Steckerstifte befinden sich auf dem Halterungsring 20 und ragen von dort aus durch entsprechende Öffnungen in dem Achsstummel-Bauteil 4 nach links in Fig. 1. Bei der gezeichneten Lösung hat man nur eine einzige Steckereinheit 92. Alternativ könnte man mit mehreren Steckereinheiten 92 arbeiten.

Alternativ kann man die genannten Gegenelemente auf dem Achsstummel-Bauteil 4 positionieren. Eine andere Variante besteht darin, die genannten Steckerstifte auf dem Halterungsring 20 oder dem Achsstummel 4 zu positionieren und die genannten Gegenelemente auf der "Steckereinheit" 92 zu positionieren. Es ist auch möglich, einen Teil der Steckerstifte auf der Steckereinheit 92 (dann Gegenelemente für diese Steckerstifte auf dem Halterungsring 20 oder dem Achsstummel 4) zu positionieren und die restlichen Steckerstifte auf dem Halterungsring 20 oder dem Achsstummel 4 zu positionieren (für diese Stekkerstifte dann die Gegenselemente auf der "Steckereinheit" 92). Schließlich sei die Variante erwähnt, dass man auf dem Achsstummel-Bauteil 4 eine Zwischensteckereinheit positioniert (nach links weisend nur Steckerstifte oder teils Steckerstifte und teils Buchsen oder nur Buchsen; nach rechts weisend nur Steckerstifte oder teils Steckerstifte und teils Buchsen oder nur Buchsen), wobei links auf der Steckereinheit 92 die jeweils passenden Gegenelemente vorhanden sind und rechts auf dem Halterungsring 20 die jeweils passenden Gegenelemente vorhanden sind.

Ferner erkennt man in Fig. 1, dass von der Steckereinheit 92 aus alle erforderlichen Leitungen (für Strom, Signale, Flüssigkeiten, ggf. Gase) in einem gemeinsamen Leitungsstrang in einer gemeinsamen Umhüllung 94 weggeführt sind, typischerweise in das Innere des Kraftfahrzeugs, an dem die Radantriebseinheit 2 angebracht ist. Der Leitungsstrang mitsamt Umhüllung 94 ist flexibel, damit die Radantriebseinheit 2 Lenkbewegungen, Federungsbewegungen und ggf. weitere Bewegungen relativ zu dem restlichen Fahrzeug vollführen kann. Es ist alternativ möglich, die Leitungen auf mehrere Leitungsstränge aufzuteilen.

Man sieht in Fig. 1, dass die linke Außenseite der linken Flanke des Reifens 16 und die rechte Außenseite der rechten Flanke des Reifens 16 die axiale Breite der gesamten Radantriebseinheit 2 markieren (siehe Begrenzungslinien 96). Der Radträger 6, die Bremsscheibe 86 (allerdings nicht die Bremssättel 88 in ihrer Gesamtheit), der Elektromotor 22 und das Getriebe 12 befinden sich im wesentlichen innerhalb dieser axialen Abmessung 96-96.

Die in Fig. 1 rechte Seite der Radantriebseinheit 2 weist von der Mitte des Kraftfahrzeugs weg, die in Fig. 1 linke Seite der Radantriebseinheit 2 weist zu der Mitte des Kraftfahrzeugs, an welchem die Radantriebseinheit 2 befestigt werden soll bzw. befestigt ist, hin.

Durch Lösen der Schrauben 98 bzw. Muttern läßt sich die Felge 14 mitsamt Reifen 16 von der Radantriebseinheit nach rechts hin wegnehmen, ganz analog wie bei einem herkömmlichen Kraftfahrzeug mit mechanisch angetriebenem Rad. Auch die Schraubenköpfe bzw. Muttern 98 liegen innerhalb der axialen Breite 96-96. Nachdem die Felge 14 mitsamt Reifen 16 demontiert ist, läßt sich das Getriebe 12 insgesamt demontieren. Zu diesem Zweck muss man lediglich den Deckel 44 entfernen und den Andrückring 78 sowie Schrauben 100 zwischen dem Planetenträger 32 und dem Radträger 6 entfernen; dann läßt sich das gesamte Getriebe 12 axial nach rechts herausziehen, wobei der Verzahnungsring 68 aus dem Ring 64 heraus kommt. Das zweite Lager 54 kommt mit dem Getriebe 12 heraus. Bei Demontage des Getriebes 12 kann man entweder das zylindrische Teil 6b des Radträgers 6 mit wegnehmen oder auch nicht. Bei entsprechender Lastdimensionierung des Lagers 18 kann das Getriebe auch ohne vorherige Demontage der Felge 14 nach rechts ausgebaut werden.

Alternativ kann man die Felge 14 mitsamt dem Getriebe 12 demontieren.

Nach Demontage des Getriebes 12 kann jetzt auch der Elektromotor 22 inklusive seines Befestigungsrings 20 mit Fortsatz 28 vom Achsstummel 4 in Fig. 1 axial nach rechts herausgezogen werden. Die Steckverbindungen zu Stecker 92 werden dabei automatisch getrennt.

Sollen die Hauptkomponenten des Elektromotors 22, Rotor 10 und Stator 8, getrennt demontiert werden, müssen zunächst lediglich die Schrauben 99 gelöst werden. Dann kann der Hauptteil des Rotors 10 axial herausgezogen werden, der Lagerungsbereich mit dem Ansatz 24 verbleibt in der Radantriebseinheit 2. Wenn gewünscht, kann dann auch der Stator 8 nach Lösen seiner Schraubverbindung an dem Befestigungsring 20 nach rechts hin herausgenommen werden; sein Innendurchmesser ist so groß, dass er über den Ansatz 24 hinweg passt.

Für Wartungs- und Reparaturarbeiten kann die Steckereinheit 92 nach links hin von der Radantriebseinheit 2 gelöst werden.

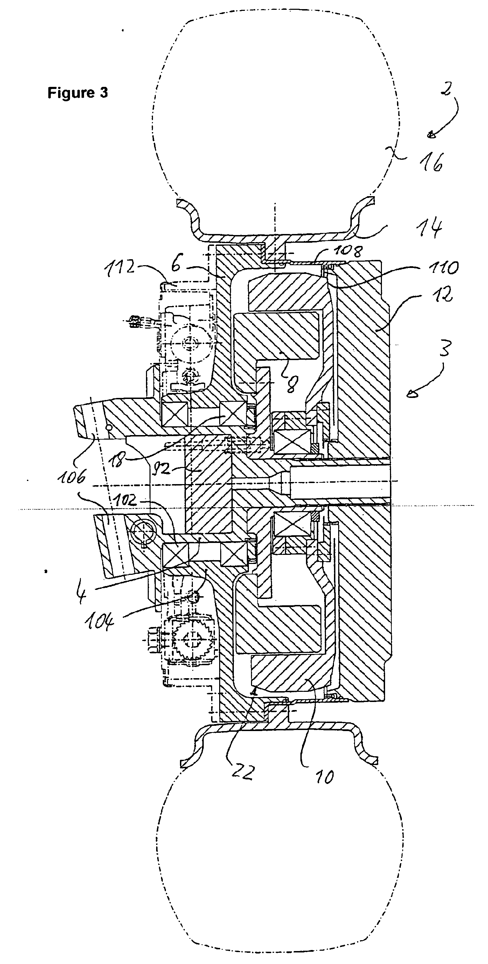

Bei der in Fig. 3 dargestellten Ausführungsform werden nur die Unterschiede, soweit sie für die Erfindung von größerem Belang sind, gegenüber der Ausführungsform von Fig. 1 und Fig. 2 beschrieben. Für analoge Bauteile werden die gleichen Bezugszeichen wie vorher verwendet.

Der Radträger 6 ist jetzt mit einem ersten Lager 18 und einem zweiten Lager 102 auf dem Achsstummel-Bauteil 4 gelagert, wobei beide Lager 18 und 102 in Fig. 3 linksseitig von dem Elektromotor 22 vorgesehen sind. Oder in anderen Worten: Die zentrale Nabe 104 des Radträgers 6 ist axial nach links hin verbreitert und bietet jetzt Platz für die zwei Lager 18 und 102; es ist keine rechte, zweite Lagerung des Radträgers 6 innerhalb des Getriebes 12 vorgesehen.

Das Achsstummel-Bauteil 4 ist einstückig nach links hin verlängert und bietet dort zwei miteinander fluchtende Bohrungen 106 zur Anbringung der Radantriebseinheit 2 an dem Kraftfahrzeug dar. Es kann sich um eine für Lenkungseinschläge schwenkbare Anbringung handeln.

Der Elektromotor 22 ist im wesentlichen analog ausgebildet wie bei der ersten Ausführungsform. Das Getriebe 12 ist wie bei der ersten Ausführungsform ein einstufiges Planetengetriebe und nur mit schematisiertem Umriss eingezeichnet. Das Getriebe 12 ist im wesentlichen analog aufgebaut wie bei der ersten Ausführungsform, wobei allerdings eine knappere Dimensionierung insbesondere des Lagers 54 gewählt sein kann, weil das Getriebe 12 keine Lagerungskräfte für den Radträger 6 ableiten muss.

Zur Drehmomentübertragung von dem Getriebe 12 zu dem Radträger 6 bzw. zu der Radfelge 14 ist ein relativ dünnwandiges Rohr 108 vorgesehen. Die Drehmomentübertragung von dem Getriebe 12 zu dem Rohr 108 erfolgt durch eine Verzahnung 110, die so ausgeführt ist, dass sie Relativbewegungen und Toleranzen im Zusammenwirken zwischen dem Getriebeausgang und dem Radträger 6 ausgleichen kann.

Es wird betont, dass das Getriebe 12 nicht zwingend mit Getriebeausgang vom Planetenträger 32 aus ausgeführt sein muss. Man kann alternativ mit Getriebeausgang vom Hohlrad 36 aus und festgehaltenem Planetenträger 32 arbeiten. Dies gilt für alle Ausführungsformen.

Bei der zweiten Ausführungsform ist der Radträger 6 nicht axial geteilt. Die Verbindung zwischen dem Radträger 6 und der Felge 14 liegt etwa in der axialen Mitte der Radantriebseinheit 2. Es versteht sich, dass zwischen dem Rohr 108 und dem Außenumfang des Getriebes 12 genügend Platz sein muss, um zu Befestigungsschrauben der Radfelge 14 zu kommen.

Statt der Bremsscheibe 86 ist bei der zweiten Ausführungsform eine Bremstrommel 112 an dem Radträger 6 befestigt. Die Betätigung der Bremsbacken in der Bremstrommel 112 erfolgt hydraulisch oder pneumatisch oder elektrisch.

Bei den gezeichneten Ausführungsformen ist jeweils der Elektromotor 22 mit einem Außenrotor 10 ausgestattet, der an seiner nach innen weisenden Zylinderfläche mit Dauermagneten wechselnder Polung (nicht eingezeichnet) besetzt ist. Der Stator 8 ist mit bewickelten Polen (nicht eingezeichnet) an seiner Außenumfangsfläche ausgestattet. Der Luftspalt des Elektromotors 22 ist zylindrisch. Der Elektromotor 22 ist elektronisch kommutiert. Die den Elektromotor 22 speisende Elektronik, die im Inneren des Fahrzeugs untergebracht ist, ist so ausgebildet, dass sie den Elektromotor 22 auf generatorischen Betrieb umschalten kann, so dass er als Bremse arbeitet. Die dabei erzeugte elektrische Energie kann entweder in eine Stromleitung zurückgespeist werden oder in einen Speicher gegeben werden oder in Bremswiderständen in Wärme umgewandelt werden.

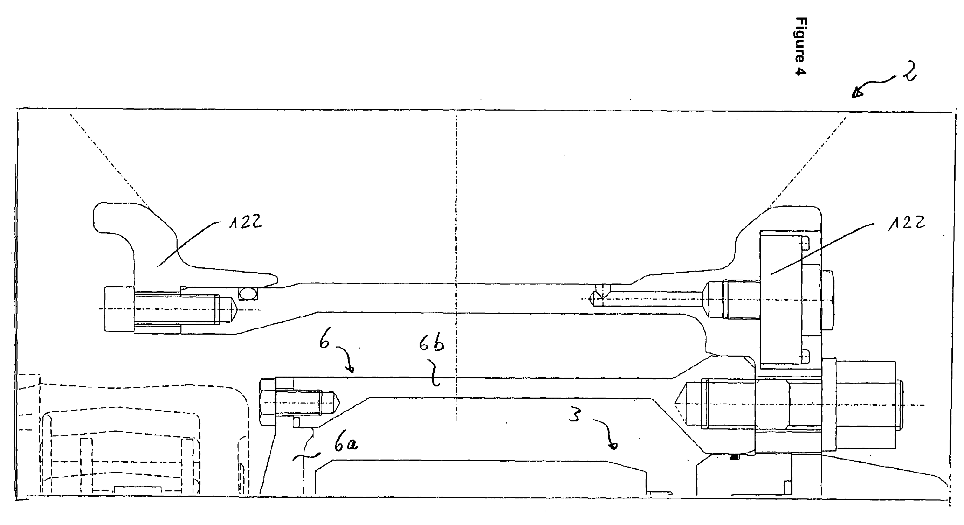

Fig. 4 zeigt die axial zweigeteilte Ausführung der Felge 14 mit der Fahrzeugmitte näherem, axial schmalerem Seitenring 120. Die Zeichnung zeigt darüber hinaus auch Teile der Reifendruckregelanlage 122, die außenseitig angeordnet ist.

## Patentansprüche

1. Elektrische Antriebseinheit für ein Kraftfahrzeug, die aufweist:
(a) einen Achsstummel (4);
(b) einen Elektromotor (22) mit einem bezüglich des Achsstummels (4) festgelegten Stator (8) und einem bezüglich des Achsstummels (4) rotierbar gelagerten Rotor (10);
(c) ein Getriebe (12), dessen Eingang für Drehmomentübertragung mit dem Rotor (10) in Verbindung steht;
(d) einen Radträger (6), der für Drehmomentübertragung mit dem Ausgang des Getriebes (12) in Verbindung steht;
(e) ein erstes Lager (18) des Radträgers (6) das an einer ersten Axialseite des Elektromotors (22), die dem Getriebe (12) abgewandt ist, vorgesehen ist;
(f) **dadurch gekennzeichnet, dass** ein zweites Lager (54; 102) des Radträgers (6)
- entweder ebenfalls an der ersten Axialseite des Elektromotors (22) vorgesehen ist,
- oder in dem Getriebe (12) vorgesehen ist, verwirklicht durch ein Lager (54) eines rotierbaren, an den Radträger (6) angeschlossenen Getriebeteils (32).

2. Antriebseinheit nach Anspruch 1,
**dadurch gekennzeichnet, dass** das Getriebe (12) ein Planetengetriebe mit einem Sonnenrad (68), Planetenrädern (34), einem Planetenträger (32) und einem Hohlrad (36) ist.

3. Antriebseinheit nach Anspruch 2,
**dadurch gekennzeichnet, dass** das genannte Lager eines rotierbaren Getriebeteils ein Lager (54) des Planetenträgers (32) ist.

4. Antriebseinheit nach Anspruch 2 oder 3,
**dadurch gekennzeichnet, dass** das die Planetengetriebe ein Planetengetriebe mit Stufenplanetenrädern ist.

5. Antriebseinheit nach einem der Ansprüche 1 bis 4,
**dadurch gekennzeichnet, dass** ein gemeinsames Schmiermittel für das Getriebe (12) und das genannte Lager (54) eines rotierbaren Getriebeteils (32) vorgesehen ist.

6. Antriebseinheit nach einem der Ansprüche 1 bis 5,
**dadurch gekennzeichnet, dass** der Rotor (10) des Elektromotors (22) und der Eingang des Getriebes (12) ohne ein zwischengefügtes Ausgleichselement in Verbindung stehen.

7. Antriebseinheit nach einem der Ansprüche 1 bis 6,
**dadurch gekennzeichnet, dass** der Radträger (6) axial geteilt ausgebildet ist.

8. Antriebseinheit nach einem der Ansprüche 1 bis 7,
**dadurch gekennzeichnet, dass** das Getriebe (12) als Modul von der Antriebseinheit (3) demontierbar ist.

9. Antriebseinheit nach Anspruch 7 und 8,
**dadurch gekennzeichnet, dass** das Getriebemodul (12) zusammen mit einem Radträger-Teil (6b) demontierbar ist.

10. Antriebseinheit nach einem der Ansprüche 1 bis 8,
**dadurch gekennzeichnet, dass** der Hauptteil des Rotors (10) des Elektromotors (22), nach Lösen von seinem Lagerungsbereich, in Axialrichtung von der Antriebseinheit (3) demontierbar ist.

11. Antriebseinheit nach einem der Ansprüche 1 bis 10,
**dadurch gekennzeichnet, dass** der Stator (8) des Elektromotors (22) in Axialrichtung von der Antriebseinheit (3) demontierbar ist.

12. Antriebseinheit nach einem der Ansprüche 1 bis 11,
**dadurch gekennzeichnet, dass** das erste Lager (18) des Radträgers (6) mindestens mit einem Teil seiner axialen Länge innerhalb der axialen Länge des Elektromotors (22) positioniert ist.

13. Antriebseinheit nach einem der Ansprüche 1 bis 12,
**dadurch gekennzeichnet, dass** ein Endbereich des Radträgers (6) in einem Ringraum positioniert ist, der das Getriebe (12) umgibt.

14. Antriebseinheit nach einem der Ansprüche 1 bis 13,
**dadurch gekennzeichnet, dass** sich ein Stirnende des Radträgers (6) innerhalb der axialen Dimension des Getriebes (12) befindet.

15. Antriebseinheit nach einem der Ansprüche 1 bis 14,
**dadurch gekennzeichnet, dass** an dem Radträger (6) eine Reifenfelge (14), vorzugsweise eine Standardfelge, befestigt ist.

16. Antriebseinheit nach Anspruch 15,
**dadurch gekennzeichnet, dass** die Reifenfelge zweigeteilt ist.

17. Antriebseinheit nach Anspruch 16,
**dadurch gekennzeichnet, dass** der Seitenring der teilbaren Felge näher zu der Fahrzeugmitte ist.

18. Antriebseinheit nach einem der Ansprüche 1 bis 14,
**dadurch gekennzeichnet, dass** an dem Radträger (6) ein Kettenrad befestigt ist.

19. Antriebseinheit nach einem der Ansprüche 1 bis 18,
**dadurch gekennzeichnet, dass** das Getriebe (12) an der fahrzeugäußeren Seite der Antriebseinheit (3) positioniert ist.

20. Antriebseinheit nach einem der Ansprüche 1 bis 19,
**dadurch gekennzeichnet, dass** an der dem Getriebe (12) abgewandten Seite des Radträgers (6) eine Bremsscheibe (86) oder eine Bremstrommel (112) vorgesehen ist.

21. Antriebseinheit nach einem der Ansprüche 1 bis 20,
**dadurch gekennzeichnet, dass** zwischen dem Ausgang des Getriebes (12) und dem Radträger (6) eine Kopplung (110) vorgesehen ist, die Relativbewegungen ausgleicht.

22. Antriebseinheit nach Anspruch 21,
**dadurch gekennzeichnet, dass** die Kopplung eine Bogenzahnkupplung ist.

23. Antriebseinheit nach Anspruch 21,
**dadurch gekennzeichnet, dass** die Kopplung eine elastische mechanische Kupplung ist.

24. Antriebseinheit nach Anspruch 21,
**dadurch gekennzeichnet, dass** die Kopplung ein Drehmomentübertragungsrohr (108) ist.

25. Antriebseinheit nach einem der Ansprüche 1 bis 24,
**dadurch gekennzeichnet, dass** in dem Drehmomentübertragungsweg zwischen dem Elektromotor (22) und dem Getriebe (12) ein lösbare Verbindung (38, 70) vorgesehen ist.

26. Antriebseinheit nach Anspruch 25,
**dadurch gekennzeichnet, dass** die lösbare Verbindung (38, 70) in das Getriebe (12) integriert ist.

27. Antriebseinheit nach Anspruch 25 oder 26,
**dadurch gekennzeichnet, dass** die lösbare Verbindung (38, 70) von außen her lösbar ist.

28. Antriebseinheit nach einem der Ansprüche 1 bis 27,
**dadurch gekennzeichnet, dass** ein Steckersystem (92) zur elektrischen und kühlungsmäßigen Anbindung des Elektromotors (22) vorgesehen ist.

29. Antriebseinheit nach Anspruch 28,
**dadurch gekennzeichnet, dass** das Steckersystem (92) mindestens eine weitere Verbindung enthält, vorzugsweise zu einer Reifendruckregelanlage und/oder zu einem radseitigen Drehzahlgeber und/oder für eine Getriebekühlung.

30. Antriebseinheit nach einem der Ansprüche 1 bis 29,
**dadurch gekennzeichnet, dass** alle Leitungen zwischen der Antriebseinheit (3) und dem restlichen Fahrzeug in einer gemeinsamen, flexiblen Umhüllung (94) geführt sind.

31. Antriebseinheit nach einem der Ansprüche 1 bis 29,
**dadurch gekennzeichnet, dass** zwischen der Antriebseinheit und dem restlichen Fahrzeug mehrere Leitungsstränge vorgesehen sind, die jeweils eine oder mehrere Leitungen enthalten.

32. Antriebseinheit nach Anspruch 31,
**dadurch gekennzeichnet, dass** es für die Antriebseinheit separierte Leitungsstrangführungen an unterschiedlichen Teilen der Radaufhängung des betreffenden Rads des Fahrzeugs gibt.

33. Antriebseinheit nach einem der Ansprüche 1 bis 32,
**dadurch gekennzeichnet, dass** der Elektromotor (22) als Bremse betreibbar ist.

34. Antriebseinheit nach einem der Ansprüche 1 bis 33,
**dadurch gekennzeichnet, dass** ihr eine Bremse zugeordnet ist, die als Parkbremse ausgelegt ist.

35. Antriebseinheit nach einem der Ansprüche 1 bis 34,
**dadurch gekennzeichnet, dass** der Elektromotor (22) mit dauermagnetischer Erregung am Rotor ausgebildet ist.

36. Antriebseinheit nach einem der Ansprüche 1 bis 35,
**dadurch gekennzeichnet, dass** der Elektromotor (22) mit Außenrotor (10) ausgebildet ist.

37. Radantriebseinheit (2) für ein Kraftfahrzeug, die aufweist:
(a) eine elektrische Antriebseinheit (3) gemäß einem der Ansprüche 1 bis 36;
(b) und ein an dem Radträger (6) der Antriebseinheit (3) befestigtes Kraftfahrzeug-Rad (14, 16).

38. Radantriebseinheit nach Anspruch 37,
**dadurch gekennzeichnet, dass** die Antriebseinheit (3), gewünschtenfalls mit Ausnahme eines fahrzeugseitigen Teilbereichs des Achsstummel-Bauteils (4), vorzugsweise einschließlich einer Bremsscheibe (86) oder einer Bremstrommel (112), im Wesentlichen innerhalb der axialen Dimension des Kraftfahrzeug-Rads (14, 16), untergebracht ist.

39. Radantriebseinheit nach Anspruch 37 oder 38,
**gekennzeichnet durch** mindestens einen Befestigungsbereich, an dem sie an einer Radaufhängung des Kraftfahrzeugs befestigbar ist.

40. Kraftfahrzeug, das mindestens eine elektrische Antriebseinheit (3) gemäß einem der Ansprüche 1 bis 36 aufweist.

## Claims

1. An electric drive unit for a motor vehicle, comprising:
(a) a stub axle (4);
(b) an electric motor (22) having a stator (8) that is fixed with respect to the stub axle (4) and having a rotor (10) that is rotatably supported with respect to the stub axle (4);
(c) a gear system (12) having its input connected to the rotor (10) for torque transmission;
(d) a wheel carrier (6) connected to the output of the gear system (12) for torque transmission;
(e) a first bearing (18) of the wheel carrier (6), that is provided on a first axial side of the electric motor (22) facing away from the gear system (12);
**characterized in**
(f) a second bearing (54; 102) of the wheel carrier (6) is provided
- either on the first axial side of the electric motor (22) as well
- or in the gear system (12), realized in the form of a bearing (54) of a rotatable gear system part (32) connected to the wheel carrier (6).

2. A drive unit according to claim 1,
**characterized in that** the gear system (12) is a planetary gear system having a sun wheel (68), planet wheels (34), a planet carrier (32) and a ring gear (36).

3. A drive unit according to claim 2,
**characterized in that** said bearing of a rotatable gear system part is a bearing (54) of the planet carrier (32).

4. A drive unit according to claim 2 or 3,
**characterized in that** the planetary gear system is a planetary gear system with stepped planet wheels.

5. A drive unit according to any of claims 1 to 4,
**characterized in that** a common lubricant is provided for the gear system (12) and said bearing (54) of a rotatable gear system part (32).

6. A drive unit according to any of claims 1 to 5,
**characterized in that** the rotor (10) of the electric motor (22) and the input of the gear system (12) are connected to each other without intermediate compensating member.

7. A drive unit according to any of claims 1 to 6,
**characterized in that** the wheel carrier (6) is of axially split design.

8. A drive unit according to any of claims 1 to 7,
**characterized in that** the gear system (12) is adapted to be unmounted from the drive unit (3) in the form of a module.

9. A drive unit according to claims 7 and 8,
**characterized in that** the gear system module (12) is adapted to be unmounted together with a wheel carrier part (6b).

10. A drive unit according to any of claims 1 to 8,
**characterized in that** the main part of the rotor (10) of the electric motor (22), upon release thereof from its supporting portion, is adapted to be unmounted from the drive unit (3) in axial direction.

11. A drive unit according to any of claims 1 to 10,
**characterized in that** the stator (8) of the electric motor (22) is adapted to be unmounted from the drive unit (3) in axial direction.

12. A drive unit according to any of claims 1 to 11,
**characterized in that** the first bearing (18) of the wheel carrier (6) is positioned with at least part of its axial length within the axial length of the electric motor (22).

13. A drive unit according to any of claims 1 to 12,
**characterized in that** an end portion of the wheel carrier (6) is positioned in an annular space surrounding the gear system (12).

14. A drive unit according to any of claims 1 to 13,
**characterized in that** a face end of the wheel carrier (6) is located within the axial dimension of the gear system (12).

15. A drive unit according to any of claims 1 to 14,
**characterized in that** the wheel carrier (6) has a tire rim (14) attached thereto, which preferably is a standard rim.

16. A drive unit according to claim 15,
**characterized in that** the tire rim is of bipartite design.

17. A drive unit according to claim 16,
**characterized in that** the lateral ring of the splittable rim is located closer to the vehicle center.

18. A drive unit according to any of claims 1 to 14,
**characterized in that** the wheel carrier (6) has a chain wheel attached thereto.

19. A drive unit according to any of claims 1 to 18,
**characterized in that** the gear system (12) is adapted to be positioned on the vehicle outer side of the drive unit (3).

20. A drive unit according to any of claims 1 to 19,
**characterized in that** a brake disc (86) or a brake drum (112) is provided on the side of the wheel carrier (6) facing away from the gear system (12).

21. A drive unit according to any of claims 1 to 20,
**characterized in that** between the output of the gear system (12) and the wheel carrier (6) there is provided a coupling (110) compensating relative movements.

22. A drive unit according to claim 21,
**characterized in that** the coupling is a curved teeth coupling.

23. A drive unit according to claim 21,
**characterized in that** the coupling is an elastic mechanical coupling.

24. A drive unit according to claim 21,
**characterized in that** the coupling is a torque-transmitting tube (108).

25. A drive unit according to any of claims 1 to 24,
**characterized in that** a releasable connection (38, 70) is provided in the torque-transmitting path between the electric motor (22) and the gear system (12).

26. A drive unit according to claim 25,
**characterized in that** the releasable connection (38, 70) is integrated in the gear system (12).

27. A drive unit according to claim 25 or 26,
**characterized in that** the releasable connection (38, 70) is adapted to be released from the outside.

28. A drive unit according to any of claims 1 to 27,
**characterized in that** there is provided a plug system (92) for connecting the electric motor (22) electrically and in terms of cooling.

29. A drive unit according to claim 28,
**characterized in that** the plug system (32) contains at least one additional connection, preferably to a tire pressure regulating system and/or a rotational speed sensor on the wheel side and/or for a gear system cooling means.

30. A drive unit according to any of claims 1 to 29,
**characterized in that** all lines between the drive unit (3) and the remainder of the vehicle extend in a common, flexible enclosure (94).

31. A drive unit according to any of claims 1 to 29,
**characterized in that** several line strands are provided between drive unit and the remainder of the vehicle, each containing one or more lines.

32. A drive unit according to claim 31,
**characterized in that** there are provided separated line strand routings for the drive unit, on different parts of the wheel suspension of the vehicle wheel concerned.

33. A drive unit according to any of claims 1 to 32,
**characterized in that** the electric motor (22) is adapted to be operated as a bra ke.

34. A drive unit according to any of claims 1 to 33,
**characterized in that** it has a brake associated therewith that is designed as parking brake.

35. A drive unit according to any of claims 1 to 34,
**characterized in that** the electric motor (22) is designed with permanent-magnetic excitation on the rotor.

36. A drive unit according to any of claims 1 to 35,
**characterized in that** the electric motor (22) is designed with an external rotor (10).

37. A wheel drive unit (2) for a motor vehicle, comprising:
(a) an electric drive unit (3) according to any of claims 1 to 36;
(b) and a motor vehicle wheel (14, 16) attached to the wheel carrier (6) of the drive unit (3).

38. A wheel drive unit according to claim 37,
**characterized in that** the drive unit (3), if desired except for a partial region of the stub axle component (4) on the vehicle side, preferably inclusive of a brake disc (86) or a brake drum (112), is accommodated substantially within the axial dimension of the motor vehicle wheel (14, 16).

39. A wheel drive unit according to claim 37 or 38,
**characterized by** at least one mounting portion where said wheel drive unit is adapted to be attached to a wheel suspension of the motor vehicle.

40. A motor vehicle comprising at least one electric drive unit (3) according to any of claims 1 to 36.

## Revendications

1. Unité d'entraînement électrique pour un véhicule automobile qui comporte :
(a) un tourillon d'arbre (4) ;
(b) un moteur électrique (22) avec un stator (8) monté fixement par rapport au tourillon d'arbre (4) et un rotor (10) monté en rotation par rapport au tourillon d'arbre (4) ;
(c) un engrenage (12) dont l'entrée est en liaison avec le rotor (10) pour la transmission du couple ;
(d) un support de roue (6) qui est en liaison avec la sortie de l'engrenage (12) pour la transmission du couple ;
(e) un premier palier (18) du support de roue (6) qui est prévu sur un premier côté axial du moteur électrique (22) qui est opposé à l'engrenage (12) ;
(f) **caractérisé en ce qu'**un second palier (54 ; 102) du support de roue (6)
soit est prévu également sur le premier côté axial du moteur électrique (22),
soit est prévu dans l'engrenage (12), matérialisé par un palier d'une partie d'engrenage (32) à rotation, reliée au support de roue (6).

2. Unité d'entraînement selon la revendication 1, **caractérisée en ce que** l'engrenage (12) est un engrenage planétaire avec une roue centrale (68), des roues satellites (34), un support d'engrenage planétaire (32) et une roue à denture intérieure (36).

3. Unité d'entraînement selon la revendication 2, **caractérisée en ce que** le palier d'une partie d'engrenage à rotation mentionné est un palier (54) du support d'engrenage planétaire (32).

4. Unité d'entraînement selon la revendication 2 ou 3, **caractérisée en ce que** l'engrenage planétaire est un engrenage planétaire avec des roues planétaires à gradins.

5. Unité d'entraînement selon l'une quelconque des revendications 1 à 4, **caractérisée en ce qu'**un lubrifiant commun est prévu pour l'engrenage (12) et le palier (54) d'une partie d'engrenage à rotation (32) mentionné.

6. Unité d'entraînement selon l'une quelconque des revendications 1 à 5, **caractérisée en ce que** le rotor (10) du moteur électrique (22) et l'entrée de l'engrenage (12) sont en relation sans élément de compensation intercalé.

7. Unité d'entraînement selon l'une quelconque des revendications 1 à 6, **caractérisée en ce que** le support de roue (6) est conçu divisé axialement.

8. Unité d'entraînement selon l'une quelconque des revendications 1 à 7, **caractérisée en ce que** l'engrenage (12) peut, en tant que module, être démonté de l'unité d'entraînement (3).

9. Unité d'entraînement selon les revendications 7 et 8, **caractérisée en ce que** le module d'engrenage (12) peut être démonté conjointement avec une partie du support de roue (6b).

10. Unité d'entraînement selon l'une quelconque des revendications 1 à 8, **caractérisée en ce que** la partie principale du rotor (10) du moteur électrique (22) peut être démonté de l'unité d'entraînement (3), dans le sens axial, après libération de son logement.

11. Unité d'entraînement selon l'une quelconque des revendications 1 à 10, **caractérisée en ce que** le stator (8) du moteur électrique (22) peut être démonté de l'unité d'entraînement (3), dans le sens axial.

12. Unité d'entraînement selon l'une quelconque des revendications 1 à 11, **caractérisée en ce que** le premier palier (18) du support de roue (6) est positionné par une partie au moins de sa longueur axiale, dans les limites de la longueur axiale du moteur électrique (22).

13. Unité d'entraînement selon l'une quelconque des revendications 1 à 12, **caractérisée en ce qu'**une extrémité du support de roue (6) est positionnée dans un espace annulaire qui entoure l'engrenage (12).

14. Unité d'entraînement selon l'une quelconque des revendications 1 à 13, **caractérisée en ce qu'**une extrémité frontale du support de roue (6) se trouve dans les limites de la dimension axiale de l'engrenage (12).

15. Unité d'entraînement selon l'une quelconque des revendications 1 à 14, **caractérisée en ce qu'**une jante de pneumatique (14), en particulier une jante standard, est fixée sur le support de roue (6).

16. Unité d'entraînement selon la revendication 15, **caractérisée en ce que** la jante de pneumatique est divisée en deux.

17. Unité d'entraînement selon la revendication 16, **caractérisée en ce que** le cercle latéral de la jante divisible est plus près du centre du véhicule.

18. Unité d'entraînement selon l'une quelconque des revendications 1 à 14, **caractérisée en ce qu'**une roue à chaîne est fixée sur le support de roue (6).

19. Unité d'entraînement selon l'une quelconque des revendications 1 à 18, **caractérisée en ce que** l'engrenage (12) est positionné sur le côté extérieur au véhicule de l'unité d'entraînement (3).

20. Unité d'entraînement selon l'une quelconque des revendications 1 à 19, **caractérisée en ce que** sur le côté du support de roue (6), opposé à l'engrenage (12), est prévu un disque de frein (86) ou un tambour de frein (112).

21. Unité d'entraînement selon l'une quelconque des revendications 1 à 20, **caractérisée en ce qu'**entre la sortie de l'engrenage (12) et le support de roue (6) est prévu un couplage (110) qui compense les mouvements relatifs.

22. Unité d'entraînement selon la revendication 21, **caractérisée en ce que** le couplage est un accouplement à denture conique.

23. Unité d'entraînement selon la revendication 21, **caractérisée en ce que** le couplage est un accouplement mécanique souple.

24. Unité d'entraînement selon la revendication 21, **caractérisée en ce que** le couplage est un tube de transmission du couple (108).

25. Unité d'entraînement selon l'une quelconque des revendications 1 à 24, **caractérisée en ce qu'**une liaison détachable (38, 70) est prévue sur le parcours de transmission du couple, entre le moteur électrique (22) et l'engrenage (12).

26. Unité d'entraînement selon la revendication 25, **caractérisée en ce que** la liaison amovible (38, 70) est intégrée dans l'engrenage (12).

27. Unité d'entraînement selon la revendication 25 ou 26, **caractérisée en ce que** la liaison détachable (38, 70) peut être détachée de l'extérieur.

28. Unité d'entraînement selon l'une quelconque des revendications 1 à 27, **caractérisée en ce qu'**un système de connecteurs (92) est prévu pour le raccordement de l'électricité et du refroidissement du moteur électrique (22).

29. Unité d'entraînement selon la revendication 28, **caractérisée en ce que** le système de connecteurs (92) comporte au moins une autre liaison, de préférence vers un équipement de régulation de pression des pneumatiques et/ou vers un capteur de vitesse côté roue et/ou pour un refroidissement de l'engrenage.

30. Unité d'entraînement selon l'une quelconque des revendications 1 à 29, **caractérisée en ce que** tous les câbles entre l'unité d'entraînement (3) et le reste du véhicule sont introduits dans une gaine (94) commune, souple.

31. Unité d'entraînement selon l'une quelconque des revendications 1 à 29, **caractérisée en ce qu'**entre l'unité d'entraînement et le reste du véhicule sont prévus plusieurs faisceaux de câbles qui comprennent chacun un ou plusieurs câbles.

32. Unité d'entraînement selon la revendication 31, **caractérisée en ce qu'**il y a des guides de faisceaux de câbles séparés pour l'unité d'entraînement, sur différentes parties de la suspension de roue de la roue concernée.

33. Unité d'entraînement selon l'une quelconque des revendications 1 à 32, **caractérisée en ce que** le moteur électrique (22) peut être utilisé comme frein.

34. Unité d'entraînement selon l'une quelconque des revendications 1 à 33, **caractérisée en ce qu'**un frein, qui est conçu comme frein de parking, peut lui être associé.

35. Unité d'entraînement selon l'une quelconque des revendications 1 à 34, **caractérisée en ce que** le moteur électrique (22) est réalisé avec une excitation par aimant permanent sur le rotor.

36. Unité d'entraînement selon l'une quelconque des revendications 1 à 35, **caractérisée en ce que** le moteur électrique (22) est réalisé avec un rotor extérieur (10).

37. Unité d'entraînement de roue (2) pour un véhicule automobile qui comprend :
(a) une unité d'entraînement (3) électrique selon l'une quelconque des revendications 1 à 36 ;
(b) et une roue de véhicule automobile (14, 16) fixée sur un support de roue (6) de l'unité d'entraînement (3).

38. Unité d'entraînement de roue selon la revendication 37, **caractérisée en ce que** l'unité d'entraînement (3), si on le souhaite à l'exception d'une zone partielle côté véhicule du tourillon d'arbre (4), en incluant de préférence un disque de frein (86) ou un tambour de frein (112), est logée principalement dans les limites de la dimension axiale de la roue de véhicule automobile (14, 16).

39. Unité d'entraînement de roue selon la revendication 37 ou 38, **caractérisée par** une plage de fixation au moins, par laquelle elle peut être fixée sur une suspension de roue du véhicule automobile.

40. Véhicule automobile qui présente au moins une unité d'entraînement (3) électrique selon l'une quelconque des revendications 1 à 36.
